# EUROPEAN PATENT SPECIFICATION

(11) **EP 1 988 388 B1**
(45) Date of publication and mention of the grant of the patent: **25.02.2015**
(21) Application number: 08155414.9
(22) Date of filing: 29.04.2008
(51) Int. Cl.: G01N 21/90, G06T 7/00

(54) **Machine for inspecting glass containers**
Maschine zur Überprüfung von Glasbehältern
Machine pour inspecter des récipients en verre

(30) Priority: 02.05.2007 US 799655
(43) Date of publication of application: 05.11.2008
(73) Proprietor: Emhart Glass S.A., 6330 Cham (CH); Applied Vision Corporation, Akron, OH 44223 (US)
(72) Inventor: Houck, R. Dean, Addison, New York 14801 (US); Sones, Richard A., Cleveland Heights, Ohio 44118 (US); Diehr, Richard D., Horseheads, New York 14845 (US); Novini, Amir R., Akron, Ohio 44333 (US)
(74) Representative: Johnstone, Douglas Ian

(56) References cited:
- EP-A1- 1 560 018
- EP-A2- 0 343 664

## Description

The present invention relates to machines, which inspect glass containers for defects, and more particularly, to a system which inspects for checks (cracks) in translucent glass containers.

In the glass container industry, small cracks, or fractures in the glass are referred to as "check defects" or "checks". Checks can range from sub millimeters to several hundred millimeters and can be oriented at any direction from vertical to horizontal. Glass is not a crystalline structure by nature, but most cracks propagate roughly along a plane of some orientation in space mostly determined by the shape of the glass at that location. Most of these crack defects will drastically weaken the container, often causing it to rupture or to leak. Therefore, it is very likely that a container manufacturer will remove a container with a check before it reaches filling plants. Checks appearing near the mouth of the containers are called finish checks. In the glass bottle industry, the term "container finish" refers to the portion of the bottle that defines the mouth, threads or beads, and the ring. The upper surface of the mouth is referred to as the sealing surface.

Another anomaly, which can also be present are bubbles. A bubble results when gas is trapped in the glass. When the bubbles are large they are referred to as a blister and when the bubbles are small, they are referred to as a seed. The presence of bubbles, while affecting the appearance of the bottle, does not necessarily require the rejection of the bottle and an operator may allow such a bottle to be packed. For purposes of this application, the word blister will include a seed.

U.S. Patents Numbers 4,701,612, 4,945,228, 4,958,223, 5,020,908, 5,200,801, 5,895,911, 6,104,482, 6,211,952, and 6,275,287, and EP 1,560,018 A1 and EP 0,343,664A2, all relate to devices that detect defects in the finish of a container.

The present invention is directed to a machine for inspecting the finish area of a glass container when rotating at an inspection station and operable to discriminate between an anomaly comprising a check and another type of anomaly, generally of the type disclosed in EP 1,560,018 A1, and as defined in the preamble of claim 1, comprising a device operable to rotate a container about its axis, a lighting device for illuminating the finish area of the container when rotating, a camera operable to image the finish area of the container when rotating, and a control which is configured to define an array of objects corresponding to reflections from an anomaly in the images captured by said camera at a predetermined number of angular increments of rotation, to define a plurality of adjacent bands which include the captured objects, and to analyze the bands to identify an anomaly as a check or as another type of anomaly.

The apparatus disclosed in the latter EP-A1 discriminates between checks and molding failures by comparing the objects with reference images/templates. If an object is brighter than a predetermined brightness range defined by the templates it is judged to be a check, and if an object is dimmer than the predetermined range it is judged to be a molding failure, i.e. the analysis is based on brightness comparisons.

The apparatus structure disclosed in EP 0,343,664 A2 is somewhat similar to that of the latter EP-A1. However, this apparatus discriminates between defects and noise i.e. non-defects, and the analysis based on the number of bright points in a masking area.

It is an object of the present invention to provide an apparatus for inspecting glass containers, which can differentiate vertical, horizontal, and any other angle cracks (checks) from blisters.

According to the present invention, there is provided a machine for inspecting the finish area of a glass container as defined in the characterizing clause of claim 1.

Additional features of the machine embodying the invention are defined in claims 2 to 13.

The present invention will now be described with reference to the accompanying drawings, which illustrate a presently preferred embodiment incorporating the principles of the invention, and in which:
Figure 1 is an oblique elevational schematic view of an inspection station of a machine for inspecting glass containers for anomalies, namely checks and other defects, as disclosed in co-pending EP-A-1,916,514 (EP Application No. 07118628.2);
Figure 2 is a schematic top view of the container at the inspection station of Figure 1 showing the light axes of a pair of light sources and the camera;
Figure 3 is a schematic elevational view showing the light axes of the light sources and camera shown in Figure 2;
Figure 4 is a drawing illustrating the structure of a control embodying the invention, showing how an unwrapped image is defined;
Figure 5 is a view, taken from the camera, of the finish area of the container shown in Figure 1, illustrating images captured each θ (theta) degrees of rotation of the container about its vertical axis through an angle Φ (phi);
Figure 6 is a schematic illustration of the unwrapping process illustrated in Figure 4;
Figure 7 is a presentation of 10 images of an anomaly captured through 11 locations spaced θ (theta) degrees apart through an angle of Φ (phi) degrees with the center of the object plotted;
Figure 8 is a presentation similar to that of Figure 7 showing only the objects (images of the anomaly) in Band 1-2;
Figure 9 is a presentation similar to that of Figure 7 showing only the objects in Band 2-3;
Figure 10 is a presentation similar to that of Figure 7 showing only the objects in Band 3-4;
Figure 11 is a drawing showing the structure of the control for determining whether a captured object is a check or a blister; and
Figure 12 is a drawing illustrating the structure of the control for identifying a container for rejection.

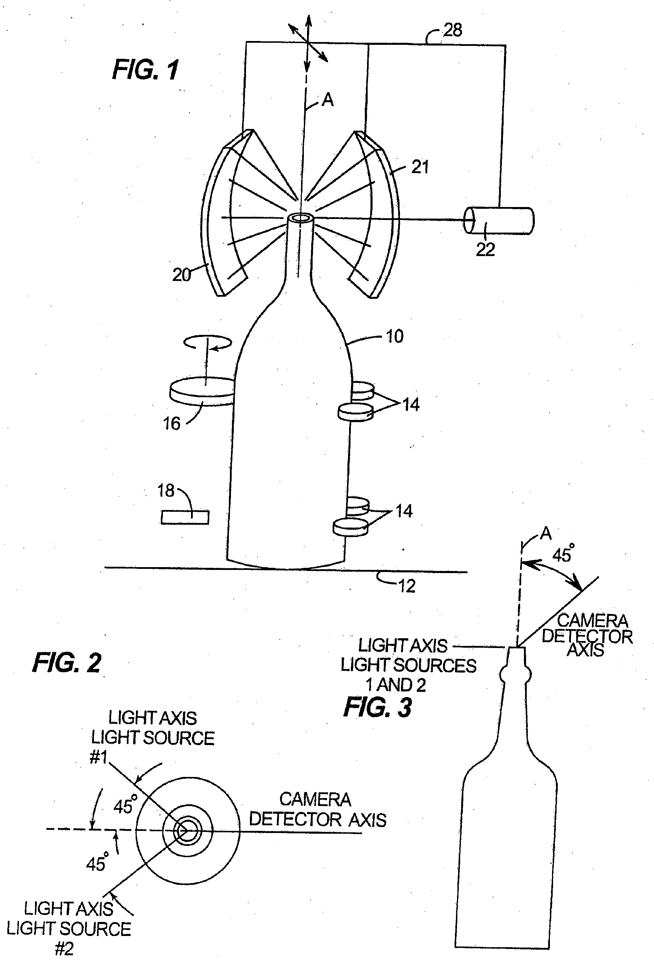

In a machine for inspecting glass containers (e.g. bottles), the containers 10 are transported vertically along a conveyor 12 to an inspection station illustrated in Figure 1. The conveyor may be a linear belt or a turret type feed system. A container 10 is engaged by upper and lower rear pairs of idler rollers 14 and a front drive wheel 16 so that rotation of the drive wheel in the clockwise direction will rotate the container in the counterclockwise direction. There is conveyor dwell of sufficient duration at the inspection station so that the container can be rotated more than 360 degrees while inspection takes place. A container presence sensor 18 will sense the presence of a container at the inspection station. Conical or arcuate light sources (a first light source 20 and a second light source 21) which can be configured from L.E.D.s, for example arranged in rows and columns as described in the above mentioned EP Application No. 07118628.2, illuminate the finish portion of the container and a camera 22 images the finish portion. The camera 22 may be a CCD, CMOS or like camera having a matrix array (X-Y array) of elements (pixels) to receive an image of the finish portion during the camera's exposure period.

As can be seen from Figures 2 and 3, the light axis for each light source is horizontal, and intersects the axis "A" of the container. Each light axis also lies in a vertical plane (not shown) of the container which intersects the axis "A" of the container, and is in front of the container. The two light axes are orthogonal to each other (the light axes are horizontal and 90 degrees related), and 45 degrees to a vertical plane including the camera 22 detector axis. The detector axis for the camera 22, which is located behind the container 10, is approximately 45 degrees from horizontal (the camera bisects the horizontal light axes). The ideal geometry that this configuration attempts to achieve is that of arcuate, conical or part-conical illumination (the light cone being horizontal with its apex, apical region or top of its frustum at the finish) where the camera 22 will not see any light directly from the light sources 20 and 21. With this relationship, the camera 22 is looking at a dark field and is ideally seeing only light coming from checks and blisters. The light sources 20 and 21 and camera 22 are supported by structure 28 that can be vertically displaced and horizontally displaced to reposition the system for different height/diameter containers.

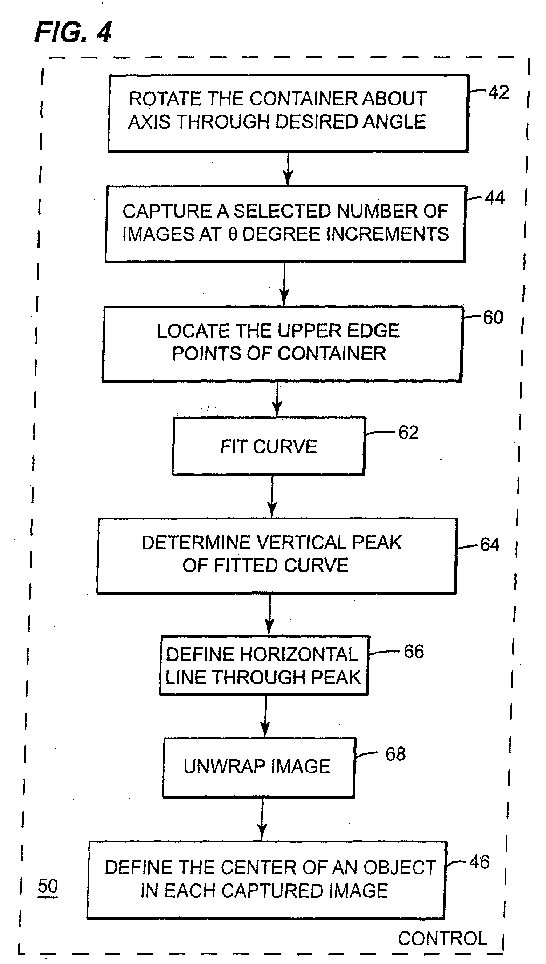

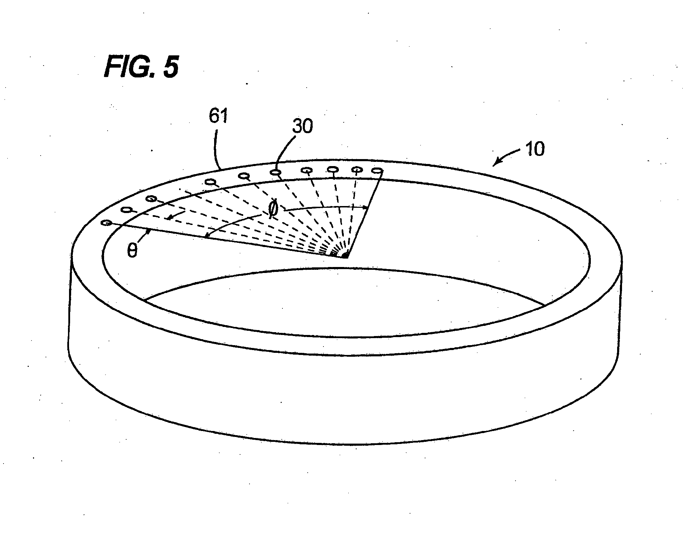

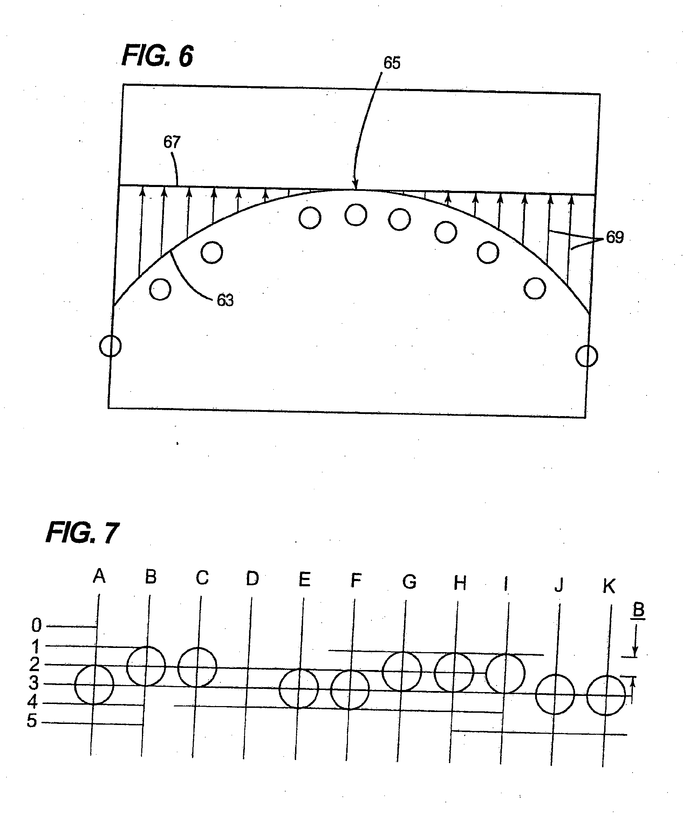

The machine embodying the invention incorporates or is associated with a control 50 (Figures 4, 11 and 12) such as a processor. To start an inspection, the machine will transfer a container 10 to the inspection station and following a time sufficient for the rotation of the container 10 to become stable, the control 50 will begin the inspection. The Control will Rotate The Container About Axis Through Desired Angle 42 (Figure 4). Figure 5 illustrates the appearance of an anomaly 30 (a check or a blister) on or in the finish of the container 10, as it would appear if captured by the camera 22 as the container 10 is rotated through θ (theta) degree increments. The anomaly 30 is represented schematically by circles in Figures 5 to 10, although the actual images captured by the camera 22 preferably will depend upon the particular characteristics and/or location of the anomaly 30, for example will depend upon its outline and/or dimensions and/or area. As illustrated, the container 10 has an anomaly 30 which is captured, i.e. reflects light from the light sources 20 and 21 towards the camera 22, in turn, at ten of the eleven locations spaced θ (theta) degrees. Such could occur by operating the camera 22 every time the container 10 rotates θ (theta) degrees to advance the anomaly 30 to the next location, or alternatively could occur by holding the camera 22 open for a prolonged period while strobing the light sources 20 and 21 at each rotation of θ (theta) degrees. The images of, or containing, the anomaly 30 are shown located within an angle of interest φ (phi) degrees, and defining a partial elliptical path since the camera axis is inclined to the axis of the container 10. The control 50 proceeds to Capture A Selected Number Of Images At θ (theta) Degree Increments 44 triggered by the first anomaly image sensed following entry of the anomaly 30 into the angle of interest, and the control 50 will then Locate The Upper Edge Points Of Container 60. This edge 61 is shown in Figure 5. The control 50 will then Fit Curve 62 to these edge points. This could be done using linear regression techniques. The fit curve 63 is shown in Figure 6. The control 50 then proceeds to Determine Vertical Peak Of Fitted Curve 64. This peak 65 is also shown in Figure 6. The control 50 then proceeds to Define Horizontal Line Through Peak 66 (line 67 in Figure 6) and proceeds to Unwrap Image 68. This procedure is shown in Figure 6 with vertical offsets 69 which are defined by the number of pixels required to shift the fitted curve 63, at each vertical row, vertically to the peak tangent line 67. The control 50 will then Define The Center Of An Anomaly In Each Captured Image 46.

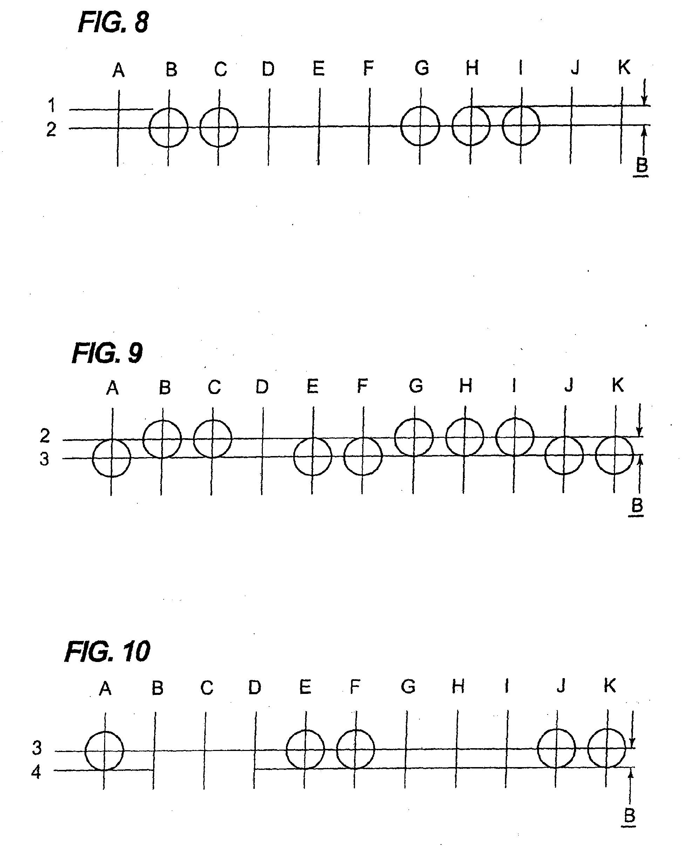

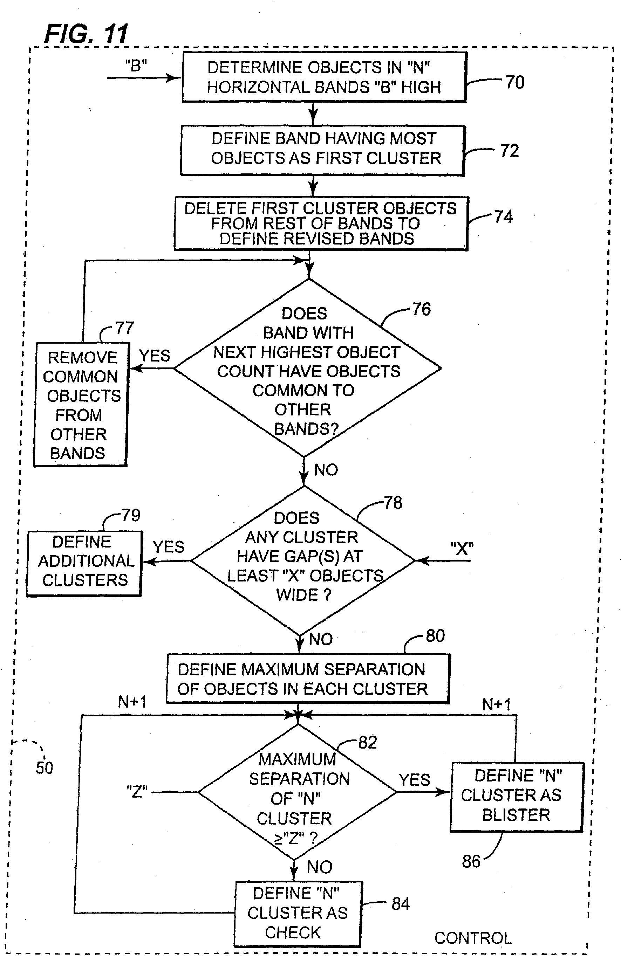

Figure 7 is a schematic presentation of the linear array of the ten images of an anomaly 30 captured as it is successively displaced through the 11 locations spaced θ (theta) degrees apart through the angle Φ (phi) degrees to allow the images of the anomaly 30 to be evaluated relative to a straight datum. The centers of the objects, i.e. captured images of the anomaly 30 are plotted showing their "Y" location as a function of three horizontal bands and with their "X" location corresponding to its angular increment. Differences in "Y" location can arise since the objects (i.e. the images of an anomaly 30 at the various angular locations), can appear to the camera 22 to be at different vertical and/or horizontal positions in or on the finish. These differences are usually relatively small in the case of a blister (bubble or seed). However, they may be relatively large in the case of a check (crack or facture) depending upon its direction of propagation, as viewed by the camera 22, or if caused by additional anomalies 30 which may be present in the angle of interest. While the preferred embodiment unwraps the elliptical image to define horizontal bands, the bands could be elliptically matched to the pattern of the captured objects. Figures 8-10 are schematic presentations of the objects sorted into each of the bands (1-2, 2-3, and 3-4) presented in Figure 7. Each band represents a horizontal scan line or lines (a band could, for example be five horizontal scan lines). The width of each band ("B") is shown as settable. Referring to Figure 11, the control 50 will Determine Objects In "N" Horizontal Bands "B" High 70. The objects within a band define a "cluster". The cluster objects identified in Figures 8 through 10 are:
Band 1 (1-2) - objects B, C, G, H, I;
Band 2 (2-3) - objects A, B, C, E, F, G, H, I, J, K;
Band 3 (3-4) - objects A, E, F, J, K;

The control 50 then proceeds to Define Band Having Most Objects As First Cluster 72. In the above illustration, Band 2 has the most objects (10). If two bands have an identical number, the control 50 could pick either one first. The control 50 then proceeds to Remove Common Objects From Other Bands 74. The bands thus become:
Band 2 (2-3) - objects A, B, C, E, F, G, H, I, J, K;
When the control 50 asks the query Does Band With Next Highest Count Of Objects Have Objects Common To Other Bands? 76, the answer will be in the negative - Band 2 has all the unique objects. No further revisions of the bands will take place. The objects in Band 2 will then be identified as a cluster.

Alternately, the bandwidth "B" could be set at 10 scan lines and all of the ten objects could be located within the single band and treated as a single cluster.

If a single band contains all of the unique objects, this is indicative of the capture of a single anomaly 30 comprising a blister. If one or more of the other bands contains unique objects, this is indicative of the presence of a check, and/or one or more additional anomalies 30 in the angle of interest since it is unlikely that any additional anomalies 30 would appear to the camera 22 to be in the same orbit or path as the first anomaly 30.

The control 50 next asks Does Any Cluster Have Gap(s) at least "X" Objects Wide (X is settable) 78. In the event the query is answered in the affirmative, the control 50 will Define Additional Clusters 79. If "X" was set at three, this query for Band 2, would be answered in the negative since there is a single gap at D one object wide. Had this gap been three objects wide (D,E,&F missing, for example) the control 50 would define the objects to the left of the gap (A,B,&C) as one cluster and the objects to the right of the gap (G-K) as a second cluster. It has been found that blisters generally have very small gaps and that a large gap indicates one or more checks (because of their differing reflection characteristics, more images of a blister than of a check will be captured during rotation of a bottle through the angle of interest). If the operator does not want to use this tool, "X" can be set at 12, for example.

The control 50 will then Define Maximum Separation Of Objects In Each Cluster 80. Cluster 1 has ten spacings separating A from K. The control 50 now determines whether the cluster is a check or a blister. This is done by answering the query "Max Separation of objects in "N" Cluster ≥ (greater than or equal to) "Z"?" 82. Assuming Z is 8 (a settable input), when this inquiry is answered for Cluster 1 the answer will be yes and the control 50 will Define "N" Cluster As Blister 86. Had the separation been less than 8, the control 50 would Define "N" Cluster As Check 84. This procedure will be repeated for each cluster.

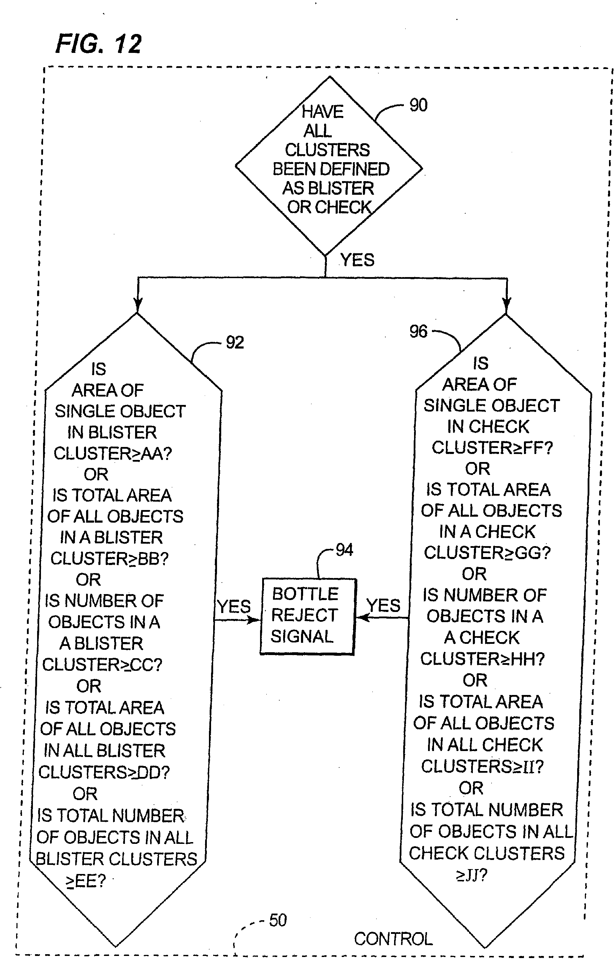

If desired, a decision could be made at this point to pass all blisters and reject all checks but additional choices are provided by the control 50. Figure 12 illustrates the structure of the control 50 for discriminating between a Blister or Check that will not result in a container 10 being rejected and one that will. The control 50 answers the query "Have All Clusters Been Defined As A Blister Or A Check? 90". If the answer is "yes", the control 50 answers the query "Is Area Of Single Object In A Blister Cluster ≥ (greater than or equal to) AA?" Or Is Total Area Of All Objects In A Blister Cluster ≥ (greater than or equal to) BB? Or Is Number Of Objects In A Blister Cluster ≥ (greater than or equal to) CC? or Is Total Area Of All Objects In All Blister Clusters ≥ (greater than or equal to) DD? Or Is Total Number Of Objects In All Blister Clusters ≥ (greater than or equal to) EE? 92. If this query is answered in the affirmative, the control 50 will issue a Bottle Reject Signal 94.

The control 50 will also answer the query "Is Area Of Single Object In Check Cluster ≥ (greater than or equal to) FF?" Or Is Total Area Of All Objects In A Check Cluster ≥ (greater than or equal to) GG? Or Is Number Of Objects In A Check Cluster ≥ (greater than or equal to) HH? or Is Total Area Of All Objects In All Check Clusters ≥ (greater than or equal to) II? Or Is Total Number Of Objects In All Check Clusters ≥ (greater than or equal to) JJ? 96. If this query is answered in the affirmative, the control 50 will also issue a Bottle Reject Signal 94.

Various modifications may be made without departing from the scope of the invention as defined in the appended claims. For example, the light sources 20 and 21 may be configured as arcuate or part-conical panels as shown in Figure 1. Alternatively and preferably they may be generally flat, with the individual LEDs in each matrix oriented, i.e. inclined, so that their optical axes are directed to define the required conical light beam.

## Claims

1. A machine for inspecting the finish area of a glass container when rotating at an inspection station, the machine comprising
a device (16) operable to rotate a container (10) about its axis (A),
a lighting device (20,21) for illuminating the finish area of the container when rotating,
a camera (22) operable to image the finish area of the container when rotating, and
a control (50) which is configured
to define an array of objects (A-K) corresponding to reflections from an anomaly (30) in the image captured by said camera (22) at a predetermined number of angular increments (θ) of rotation, wherein each captured object has a Y location and an X location within the array, and
to define a plurality of adjacent bands (1-4) of the array of the captured objects, wherein each captured object has its Y location in the array as a function of the adjacent bands and its X location within the array corresponding to its angular increment,
**characterized in that**
the machine is configured to discriminate between blisters and checks by the control analyzing the adjacent bands to determine whether the anomaly (30) is a blister or a check,
the relationship between the lighting device (20,21) and the camera (22) is such that a dark field will be imaged by the camera when the finish area is illuminated by the lighting device, the imaged dark field including light from a check or a blister if present, and
said control (50) comprises means configured to define clusters of the captured objects including
means (72) configured to determine the band (2-3) having the most captured objects,
means (74) configured to delete the objects in the band having the most objects from the rest of the bands (1-2, 3-4) which include objects,
means (76) configured to repeatedly determine the band of the rest of the bands (1-2, 3-4) having the most objects and delete the objects in the band of the rest of the bands having the most objects from the remainder of the bands until the objects in each band are unique, the unique objects in each band defining a cluster,
means (80) configured to define a selected separation (Z) of objects in a cluster,
means (82) configured to determine the separation of the farthest separated objects in a cluster,
means (84) configured to define the cluster as a check where separation of the farthest separated objects in the cluster is less than the selected separation (Z), and
means (86) configured to define the cluster as a blister where the farthest separated objects in the cluster are separated by at least the selected separation (Z).

2. A machine according to claim 1, wherein said control (50) further comprises
means (78) configured to determine whether there is at least one gap having a minimum size between objects in each cluster, and
means (79) configured to define the objects on opposite sides of the or each gap as additional clusters (79), the number of additional clusters being a function of the number of such gaps.

3. A machine according to claim 1 or 2, wherein said control further comprises
means (96) configured to determine the area of the largest object in a cluster defined as a check, and
means (94) configured to generate a reject signal in the event the area of said largest object exceeds a predetermined area.

4. A machine according to claim 1, 2 or 3, wherein the configuration of said control further comprises
means (96) for determining the total area of all objects in a cluster defined as a check, and
means (94) for generating a reject signal in the event the total area exceeds a predetermined area.

5. A machine according to claim 1, 2, 3 or 4, wherein the configuration of said control further comprises
means (96) for determining the number of objects in a cluster defined as a check, and
means (94) for generating a reject signal in the event that the number of objects in the cluster exceeds a predetermined number.

6. A machine according to any one of claims 1 to 5, wherein said control further comprises
means (96) configured to determine the total area of all objects in all of the clusters wherein the object has been defined as a check, and
means (94) configured to generate a reject signal in the event the total area exceeds a predetermined area.

7. A machine according to any one of claims 1 to 6, wherein said control further comprises
means (92/96) configured to determine the total number of objects in all clusters defined as a check, and
means (94) configured to generate a reject signal in the event that the total number of objects in all of the clusters defined as a check exceeds a predetermined number.

8. A machine according to any one of claims 1 to 7, wherein said control further comprises
means (92) configured to determine the area of the largest object in a cluster defined as a blister, and
means (94) configured to generate a reject signal in the event the area of said largest object in the cluster defined as a blister exceeds the predetermined area.

9. A machine according to any one of claims 1 to 8, wherein said control further comprises
means (92) configured to determine the total area of all objects in a cluster defined as a blister, and
means (94) configured to generate a reject signal in the event the total area exceeds a predetermined area.

10. A machine according to any one of claims 1 to 9, wherein said control further comprises
means (92) configured to generate a reject signal in the event that the number of objects in a cluster defined as a blister exceeds a predetermined number.

11. A machine according to anyone of claims 1 to 10, wherein said control further comprises
means (92) configured to determine the total area of all objects in all of the clusters wherein the object has been defined as a blister, and
means (94) configured to generate a reject signal in the event the total area exceeds a predetermined area.

12. A machine according to anyone of claims 1 to 11, wherein said control further comprises
means configured to determine the total number of objects in all of the clusters identified as a blister, and
means configured to generate a reject signal in the event that the total number of objects in all of the clusters defined as a blister exceeds a predetermined number.

13. A machine according to any preceding claim, wherein said bands are horizontal bands.

## Patentansprüche

1. Maschine zum Inspizieren des Mündungsbereichs eines Glasbehälters beim Drehen in einer Prüfstation mit:
einer Vorrichtung (16), mit dem ein Behälter (10) um eine Achse (A) drehbar ist;
einer Beleuchtungsvorrichtung (20, 21) zum Beleuchten des Mündungsbereichs des drehenden Behälters;
einer Kamera (22), mit der sich der Mündungsbereich des sich drehenden Behälters beobachten lässt;
einer Steuerung (50), mittels der
ein Feld von Objekten (A-K) definierbar ist, die Reflexionen einer Anomalie (30) im von der Kamera (22) erfassten Bild in einer vorbestimmten Anzahl von Winkelschritten (Θ) der Drehung entsprechen, wobei jedes erfasste Objekt einen Y- und einen X-Ort im Feld hat, und
eine Vielzahl angrenzender Bänder (1-4) des Feldes der erfassten Objekte definierbar ist, wobei jedes erfasste Objekt seinen Y-Ort im Feld als Funktion der angrenzenden Bänder und seinen X-Ort im Feld entsprechend seinem Winkelschritt hat;
**dadurch gekennzeichnet,**
**dass** die Maschine eingerichtet ist, zwischen Bläschen und Defekten zu unterscheiden, indem die Steuerung die aneinander grenzenden Bänder analysiert, um zu ermitteln, ob die Anomalie (30) ein Bläschen oder ein Defekt ist;
**dass** die Beziehung zwischen der Beleuchtungsvorrichtung (20, 21) und der Kamera (22) derart ist, dass ein Dunkelfeld von der Kamera abgebildet wird, wenn der Mündungsbereich von der Beleuchtungsvorrichtung beleuchtet wird, wobei das abgebildete Dunkelfeld Licht aus einem Defekt oder einem Bläschen enthält, sofern vorhanden; und
**dass** die Steuerung (50) eine Einrichtung aufweist, mittels der Cluster der erfassten Objekte definierbar sind und die aufweisen:
eine Einrichtung (72), mittels der das Band (2-3) mit den meisten erfassten Objekten ermittelbar ist,
eine Einrichtung (74), mittels der die Objekte im Band mit den meisten Objekten aus dem Rest der Objekte enthaltenden Bänder (1-2, 3-4) löschbar sind,
eine Einrichtung (76), mittels der dasjenige aus dem Rest der die meisten Objekte enthaltenden Bänder (1-2, 3-4) wiederholt ermittelbar ist, das die meisten Objekte enthält, und die Objekte in demjenigen der die meisten Objekte enthaltenden Bänder aus dem Rest der Bänder löschbar sind, bis die Objekte in jedem Band eindeutig sind, wobei die eindeutigen Objekte in jedem Band einen Cluster definieren,
eine Einrichtung (80), mittels der eine gewählte Trennung (Z) von Objekten in einem Cluster definierbar ist,
eine Einrichtung (82), mittels der die Trennung der am weitesten getrennten Objekte in einem Cluster ermittelbar ist,
eine Einrichtung (84), mittels der der Cluster als ein Defekt definierbar ist, wo die Trennung der am weitesten getrennten Objekte im Cluster geringer als die gewählte Trennung (Z) ist, und
eine Einrichtung (86), mittels deren ein Cluster als Bläschen definierbar ist, wo die am weitesten getrennten Objekte im Cluster um mindestens die gewählte Trennung (Z) getrennt sind.

2. Maschine nach Anspruch 1, deren Steuerung (50) weiterhin aufweist:
eine Einrichtung (78), mittels der ermittelbar ist, ob zwischen Objekten in jedem Cluster mindestens ein Spalt einer Mindestgröße vorliegt, und
eine Einrichtung (79), mittels der die Objekte auf gegenüber liegenden Seiten des oder jedes Spalts als zusätzliche Cluster (79) definierbar sind, wobei die Anzahl zusätzlicher Cluster eine Funktion der Anzahl solcher Spalte ist.

3. Maschine nach Anspruch 1 oder 2, deren Steuerung weiterhin aufweist:
eine Einrichtung (96), mittels der der Flächeninhalt des größten Objekts in einem als ein Defekt definierten Cluster ermittelbar ist, und
eine Einrichtung (94), mittels der ein Auswurfsignal generierbar ist, falls der Flächeninhalt des größten Objekts eine vorbestimmte Größe übersteigt.

4. Maschine nach Anspruch 1, 2 oder 3, deren Steuerung weiterhin aufweist:
eine Einrichtung (96), mittels der der Gesamt-Flächeninhalt aller Objekte in einem Cluster ermittelbar ist, der als ein Defekt definiert ist, und
eine Einrichtung (94), mittels der ein Auswurfsignal generierbar ist, falls der Gesamt-Flächeninhalt eine vorbestimmte Größe übersteigt.

5. Maschine nach Anspruch 1, 2, 3 oder 4, deren Steuerung weiterhin aufweist:
eine Einrichtung (96), mittels der die Anzahl der Objekte in einem Cluster ermittelbar ist, der als ein Defekt definiert ist, und
eine Einrichtung (94), mittels der ein Auswurfsignal generierbar ist, falls die Anzahl der Objekte in dem Cluster eine vorbestimmte Größe übersteigt.

6. Maschine nach einem der Ansprüche 1 bis 5, deren Steuerung weiterhin aufweist:
eine Einrichtung (96), mittels der der Gesamt-Flächeninhalt aller Objekte in allen den Clustern ermittelbar ist, in denen das Objekt als Defekt definiert wurde, und
eine Einrichtung (94), mittels der ein Auswurfsignal ermittelbar ist, falls der Gesamt-Flächeninhalt eine vorbestimmte Größe übersteigt.

7. Maschine nach einem der Ansprüche 1 bis 6, deren Steuerung weiterhin aufweist:
eine Einrichtung (92/96), mittels der die Gesamtanzahl von Objekten in allen Clustern ermittelbar ist, die als ein Defekt definiert sind, und
eine Einrichtung (94), mit der ein Auswurfsignal generierbar ist, falls die Gesamt-Anzahl von Objekten in allen der als ein Defekt definierten Clustern eine vorbestimmte Größe übersteigt.

8. Maschine nach einem der Ansprüche 1 bis 7, deren Steuerung weiterhin aufweist:
eine Einrichtung (92), mittels der der Flächeninhalt des größten Objekts in einem Cluster ermittelbar ist, der als Bläschen definiert ist, und
eine Einrichtung (94), mittels der ein Auswurfsignal generierbar ist, falls der Flächeninhalt des größten Objekts in dem als Bläschen definierten Cluster die vorbestimmte Größe übersteigt.

9. Maschine nach einem der Ansprüche 1 bis 8, deren Steuerung weiterhin aufweist:
eine Einrichtung (92), mittels der der Gesamt-Flächeninhalt aller Objekte in einem Cluster ermittelbar ist, der als Bläschen definiert ist; und
eine Einrichtung (94), mittels der ein Auswurfsignal generierbar ist, falls der Gesamt-Flächeninhalt eine vorbestimmte Größe übersteigt.

10. Maschine nach einem der Ansprüche 1 bis 9, deren Steuerung weiterhin aufweist:
eine Einrichtung (92), mittels der ein Auswurfsignal generierbar ist, falls die Anzahl der Objekte in einem als Bläschen definierten Cluster eine vorbestimmte Größe übersteigt.

11. Maschine nach einem der Ansprüche 1 bis 10, deren Steuerung weiterhin aufweist:
eine Einrichtung (92), mittels der der Gesamt-Flächeninhalt aller Objekte in allen den Clustern ermittelbar ist, in denen das Objekt als Bläschen definiert worden ist, und
eine Einrichtung (94), mittels der ein Auswurfsignal generierbar ist, falls der Gesamt-Flächeninhalt eine vorbestimmte Größe übersteigt.

12. Maschine nach einem der Ansprüche 1 bis 11, deren Steuerung weiterhin aufweist:
eine Einrichtung, mittels der die Gesamtanzahl von Objekten in allen den Clustern ermittelbar ist, die als Blister definiert sind, und
eine Einrichtung, mittels der ein Auswurfsignal generierbar ist, falls die Gesamt-Anzahl von Objekten in allen als Bläschen definierten Clustern eine vorbestimmte Größe übersteigt.

13. Maschine nach einem beliebigen der vorgehenden Ansprüche, bei der die Bänder horizontale Bänder sind.

## Revendications

1. Machine d'inspection de la zone de bague d'un récipient en verre lors de sa rotation au niveau d'un poste d'inspection, la machine comprenant
un dispositif (16) opérationnel pour mettre en rotation un récipient (10) autour de son axe (A),
un dispositif d'éclairage (20, 2 1) destiné à éclairer la zone de bague du récipient lors de la rotation,
une caméra (22) opérationnelle pour imager la zone de bague du récipient lors de la rotation, et
une unité de commande (50) qui est configurée
pour définir une série d'objets (A à K) correspondants à des reflets d'une anomalie (30) dans l'image capturée par ladite caméra (22) à un nombre prédéterminé d'incréments (θ) de rotation angulaires, dans laquelle chaque objet capturé a un emplacement Y et un emplacement X au sein de la série, et
pour définir une pluralité de bandes adjacentes (1 à 4) de la série d'objets capturés, dans laquelle chaque objet capturé a son emplacement Y dans la série en fonction des bandes adjacentes et son emplacement X au sein de la série correspondant à son incrément angulaire,
**caractérisée en ce que**
la machine est configurée pour faire la distinction entre des bouillons et des glaçures grâce à l'unité de commande analysant les bandes adjacentes pour déterminer si l'anomalie (30) est un bouillon ou une glaçure,
**la relation entre** le dispositif d'éclairage (20, 21) et la caméra (22) est telle qu'un fond noir sera imagé par la caméra lorsque la zone de bague est illuminée par le dispositif d'éclairage, le fond noir imagé incluant la lumière d'un bouillon ou d'une glaçure s'ils sont présents, et
ladite unité de commande (50) comprend un moyen configuré pour définir des groupes d'objets capturés incluant
un moyen (72) configuré pour déterminer la bande (2-3) ayant le plus d'objets capturés,
un moyen (74) configuré pour supprimer les objets dans la bande ayant le plus d'objets du reste des bandes (1-2, 3-4) qui incluent des objets,
un moyen (76) configuré pour déterminer de façon répétée la bande du reste des bandes (1-2, 3-4) ayant le plus d'objets et supprimer les objets dans la bande du reste des bandes ayant le plus d'objets parmi le reste des bandes jusqu'à ce que les objets de chaque bande soient uniques, les objets uniques dans chaque bande définissant un groupe,
un moyen (80) c o n figuré pour définir une séparation sélectionnée (Z) d'objets dans un groupe,
un moyen (82) configuré pour déterminer la séparation des objets séparés les plus éloignés dans un groupe,
un moyen (84) configuré pour définir le groupe comme une glaçure où la séparation des objets séparés les plus éloignés dans le groupe est inférieure à la séparation sélectionnée (Z), et
un moyen (86) configuré pour définir le groupe en tant que bouillon où les objets séparés les plus éloignés dans le groupe sont séparés d'au moins la séparation sélectionnée (Z).

2. Machine selon la revendication 1, dans laquelle ladite unité de commande (50) comprend en outre
un moyen (78) configuré pour déterminer s'il y a au moins un écartement ayant une taille minimale entre les objets dans chaque groupe, et
un moyen (79) configuré pour définir les objets sur des côtés opposés du ou de chaque écartement comme des groupes supplémentaires (79), le nombre de groupes supplémentaires étant fonction du nombre de tels écartements.

3. Machine selon la revendication 1 ou 2, dans laquelle ladite unité de commande comprend en outre
un moyen (96) configuré pour déterminer l'aire de l'objet le plus grand dans un groupe défini comme une glaçure, et
un moyen (94) configuré pour générer un signal de rejet dans le cas où l'aire dudit objet le plus grand dépasse une aire prédéterminée.

4. Machine selon la revendication 1, 2 ou 3, dans laquelle la configuration de ladite unité de commande comprend en outre
un moyen (96) de détermination de l'aire totale de tous les objets dans un groupe défini comme un bouillon, et
un moyen (94) de génération d'un signal de rejet dans le cas où l'aire totale dépasse une aire prédéterminée.

5. Machine selon la revendication 1, 2, 3 ou 4, dans laquelle la configuration de ladite unité de commande comprend en outre
un moyen (96) de détermination du nombre d'objets dans un groupe défini comme une glaçure, et
un moyen (94) de génération d'un signal de rejet dans le cas où le nombre d'objets dans le groupe dépasse un nombre prédéterminé.

6. **Machine selon l'une quelconque** des revendications 1 à 5, dans laquelle ladite unité de commande comprend en outre
un moyen (96) configuré pour déterminer l'aire totale de tous les objets dans tous les groupes dans lesquels l'objet a été défini comme une glaçure, et
un moyen (94) configuré pour générer un signal de rejet dans le cas où l'aire totale dépasse une aire prédéterminée.

7. Machine **selon l'une quelconque des** revendications 1 à 6, dans laquelle ladite unité de commande comprend en outre
un moyen (92/96) configuré pour déterminer le nombre total d'objets dans tous les groupes définis comme une glaçure, et
un moyen (94) configuré pour générer un signal de rejet dans le cas où le nombre total d'objets dans tous les groupes définis comme une glaçure dépasse un nombre prédéterminé.

8. **Machine selon l'une quelconque des** revendications 1 à 7, dans laquelle ladite unité de commande comprend en outre
un moyen (92) configuré pour déterminer l'aire de l'objet le plus grand dans un groupe défini comme un bouillon, et
un moyen (94) configuré pour générer un signal de rejet dans le cas où l'aire dudit objet le plus grand dans le groupe défini comme un bouillon dépasse l'aire prédéterminée.

9. **Machine selon l'une quelconque** des revendications 1 à 8, dans laquelle ladite unité de commande comprend en outre
un moyen (92) configuré pour déterminer l'aire totale de tous les objets dans un groupe défini comme un bouillon, et
un moyen (94) configuré pour générer un signal de rejet dans le cas où l'aire totale dépasse une aire prédéterminée.

10. **Machine selon l'une quelconque** des revendications 1 à 9, dans laquelle ladite unité de commande comprend en outre
un moyen (92) configuré pour générer un signal de rejet dans le cas où le nombre d'objets dans un groupe défini comme un **bouillon dépasse** un nombre prédéterminé.

11. **Machine selon l'une quelconque** des revendications 1 à 10, dans laquelle ladite unité de commande comprend en outre
un moyen (92) configuré pour déterminer l'aire totale de tous les objets dans tous les groupes dans lesquels l'objet a été défini comme un bouillon, et
un moyen (94) configuré pour générer un signal de rejet dans le cas où l'aire totale dépasse une aire prédéterminée.

12. **Machine selon l'une quelconque** des revendications 1 à 11, dans laquelle ladite unité de commande comprend en outre
un moyen configuré pour déterminer le nombre total d'objets dans tous les groupes identifiés comme un bouillon, et
un moyen configuré pour générer un signal de rejet dans le cas où le nombre total d'objets dans tous les groupes définis comme un bouillon dépasse un nombre prédéterminé.

13. **Machine selon l'une quelconque** des revendications précédentes, dans laquelle lesdites bandes sont des bandes horizontales.
